# FASCICULE DE BREVET EUROPEEN

(11) **EP 3 732 359 B1**
(45) Date de publication et mention de la délivrance du brevet: **16.02.2022**
(21) Numéro de dépôt: 18855119.6
(22) Date de dépôt: 21.12.2018
(51) Int. Cl.: F02C 9/34, F02C 7/228

(54) **PROCÉDÉ DE COMMANDE DE L'ALIMENTATION EN CARBURANT D'UNE CHAMBRE DE COMBUSTION D'UNE TURBOMACHINE, SYSTÈME D'ALIMENTATION EN CARBURANT ET TURBOMACHINE**
VERFAHREN ZUR STEUERUNG DER BRENNSTOFFZUFUHR ZU EINER BRENNKAMMER EINER TURBINENMASCHINE, KRAFTSTOFFVERSORGUNGSSYSTEM UND TURBINENMOTOR
METHOD FOR CONTROLLING THE SUPPLY OF FUEL TO A COMBUSTION CHAMBER OF A TURBINE ENGINE, FUEL SUPPLY SYSTEM, AND TURBINE ENGINE

(30) Priorité: 28.12.2017 FR 1763306
(43) Date de publication de la demande: 04.11.2020
(73) Titulaire: SAFRAN AIRCRAFT ENGINES, 75015 Paris (FR)
(72) Inventeur: BOUTALEB, Mohammed-Lamine, 77550 MOISSY-CRAMAYEL (FR); CHALAUD, Sébastien Christophe, 77550 MOISSY-CRAMAYEL (FR); LE PACHE, Gwénolé, Yann, 77550 MOISSY-CRAMAYEL (FR)
(74) Mandataire: Brevalex
(86) Numéro de dépôt international: PCT/FR2018/053507
(87) Numéro de publication internationale: WO 2019/129976

(56) Documents cités:
- US-A- 5 916 126
- US-A1- 2015 027 100

## Description

### DOMAINE TECHNIQUE

L'invention a pour objet le domaine des turbomachines et du circuit d'alimentation de telle turbomachine.

L'invention concerne ainsi un procédé de commande de l'alimentation en carburant d'une chambre de combustion d'une turbomachine, un circuit d'alimentation et une turbomachine.

### ÉTAT DE LA TECHNIQUE ANTÉRIEURE

D'une manière générale, une chambre de combustion de turbomachine est alimentée en carburant par des dispositifs d'injection conçus pour pulvériser le carburant dans la chambre de combustion. Ces mêmes dispositifs d'injection, formant un système d'injection de la chambre de combustion, sont alimentés par un circuit d'alimentation en carburant de la turbomachine.

Les dispositifs d'injection présentent au moins une première et une deuxième partie configurées pour autoriser une alimentation de la chambre de combustion selon un type d'alimentation respectif. La première partie correspond ainsi à un type d'alimentation pilote dédié au faible régime et la deuxième partie correspond à un type d'alimentation principal dédié au haut régime et permettant d'optimiser la combustion de la chambre à ces haut régime de manière à réduire la pollution générée. Ces première et deuxième parties peuvent être :
- soit chacune constituée par des dispositifs d'injection dédiés au type d'alimentation correspondant,
- soit chacune constituée par une partie de chaque dispositif d'injection qui est dédiée au type d'alimentation correspondant.

Quelle que soit la configuration de ces dispositifs d'injection, la répartition de l'alimentation en carburant de chacune de la première et la deuxième partie est fournie par le circuit d'alimentation en carburant.

Ainsi, pour cela le circuit d'alimentation comporte une ligne d'injection pilote et une ligne d'injection principale entre lesquelles sont réparties l'alimentation en carburant de la chambre de combustion, la ligne d'injection pilote alimentant en carburant la première partie des dispositifs d'injection et la ligne d'injection principale alimentant la deuxième partie des dispositifs d'injection. L'alimentation en carburant de la chambre d'injection est ainsi répartie entre la ligne d'injection pilote et la ligne d'injection principale.

Afin de limiter la pollution générée par les turbomachines, la répartition de l'alimentation en carburant des lignes d'injection pilote et principale est, pour les différentes phases de fonctionnement de la turbomachine, que ce soit en vol ou au sol, particulièrement règlementée.

En ce qui concerne les changements de répartition de l'alimentation en carburant des lignes d'injection pilote et principale, entre ses différentes phases de fonctionnement, la règlementation est plus légère et requiert uniquement que ce passage ait lieu pendant une période de temps prédéterminée.

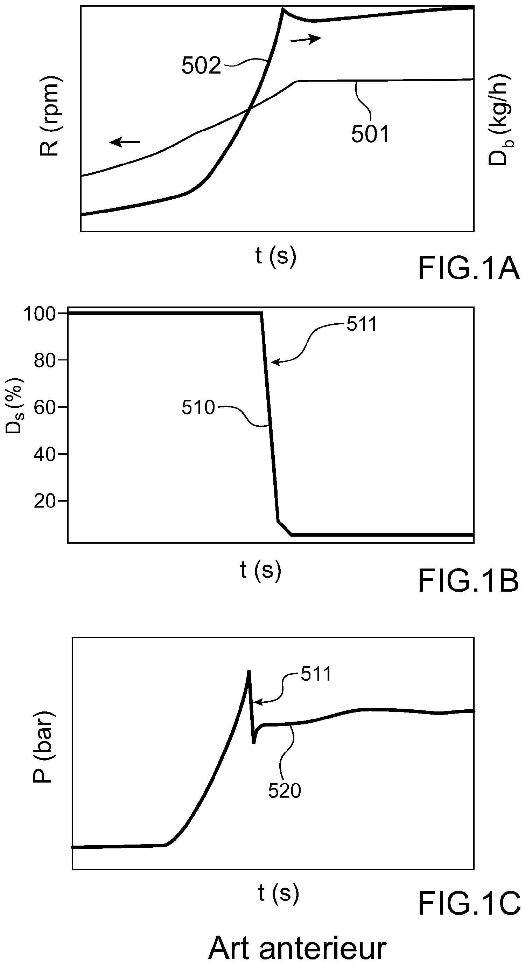

Afin d'exemplifier un tel passage, il a été fourni sur les figures 1A à 1C un exemple de transition de l'alimentation en carburant lors d'une accélération de la turbomachine la faisant passer d'un bas régime à un haut régime. Comme le montre la figure 1B, dans cet exemple, la répartition de l'alimentation passe d'une première valeur de répartition d'alimentation en carburant de 100% sur la ligne d'injection pilote, la ligne d'injection principale étant sensiblement non alimentée en carburant, à une deuxième valeur de répartition d'alimentation en carburant de 5% sur la ligne d'injection, la ligne d'injection principale étant alimentée avec 95% du carburant.

Ainsi, en conformité avec l'enseignement du document FR 3025590 A1 et comme illustré sur les figures 1A à 1C, il est connu de faire un tel passage de manière abrupte.

On peut ainsi voir sur ces figures que, lors d'un tel changement de régime 501 (R sur la figure 1A), le débit d'injection de carburant 502 (Db sur la figure 1A) est augmenté graduellement jusqu'à atteindre, en même temps que le régime 501, un maximum. Le passage 511 de la répartition 510 (Ds sur la figure 1B) de la première valeur à la deuxième valeur est réalisé de manière abrupte lorsque le régime atteint son maximum. Comme le montre la figure 1C, ce passage de la répartition 510 de la première valeur à la deuxième valeur entraîne elle-même une forte baisse 521 de la pression 520 (P sur la figure 1C) dans le circuit d'alimentation en carburant.

Une telle baisse de pression a pour origine le fait que, pour un même débit, les pertes de charges sont plus importantes pour la première partie des dispositifs d'injection que pour la deuxième partie des dispositifs d'injection. Il résulte ainsi que le passage de la première valeur à la deuxième valeur de répartition de l'alimentation en carburant a pour conséquence une réduction importante des pertes de charges générées par la ligne d'injection concernée, et donc une diminution, pour un débit de carburant égal, de la pression du circuit d'alimentation en carburant.

Or une telle baisse de la pression peut être particulièrement préjudiciable pour le fonctionnement de la turbomachine lorsqu'elle a lieu pendant certaines phases de fonctionnement de la turbomachine, telles que la phase d'accélération illustrée sur les figures 1A à 1C, ou encore, des phases d'ingestion d'éléments extérieurs, tels qu'un oiseau, de l'eau de pluie/neige et de la grêle. Ces différentes phases requièrent une préservation de la pression dans le circuit d'alimentation.

En effet, dans une turbomachine, la haute pression du circuit d'alimentation en carburant est également utilisée pour alimenter des vérins hydrauliques, commandant des organes mobiles utiles pour l'opérabilité du moteur, par exemple, des aubes de stator à calage variable ou des vannes de décharges d'un compresseur. Une baisse de pression dans le circuit d'alimentation en carburant a donc une répercussion directe sur le muscle hydraulique alimentant ces vérins et donc sur la capacité à actionner les organes mobiles, ceci alors que les efforts s'appliquant sur les organes mobiles peuvent être en augmentation. Il est donc nécessaire, afin de permettre un bon fonctionnement de la turbomachine, de prévoir un dimensionnement augmenté des vérins hydrauliques alimentés par le circuit de carburant de la turbomachine, afin de pouvoir fournir des efforts suffisants avec cependant moins de muscle hydraulique du fait de la baisse de pression liée au changement de répartition de l'alimentation en carburant.

Ainsi, les procédés de commande de l'alimentation en carburant actuellement mis en œuvre ne sont pas adaptés en ce qui concerne les phases de changement de la répartition en carburant puisqu'ils peuvent être à l'origine d'une baisse de pression dans le circuit d'alimentation en carburant de la turbomachine. Cette baisse de pression, afin de ne pas être préjudiciable au fonctionnement de la turbomachine, peut nécessiter un dimensionnement à la hausse des vérins hydrauliques, notamment une augmentation de leur diamètre.

Les documents US5916126A et US2015/027100 décrivent des procédés de commande de l'alimentation en carburant connus de l'art antérieur.

### EXPOSÉ DE L'INVENTION

L'invention vise à résoudre cet inconvénient et a ainsi pour but de fournir un procédé de commande de l'alimentation en carburant d'une turbomachine qui permet de garantir une pression adéquate du circuit d'alimentation en carburant lors d'un changement de la répartition en carburant ceci sans nécessiter un dimensionnement à la hausse des vérins hydrauliques, comme cela est le cas pour les turbomachines de l'art antérieur.

L'invention concerne un procédé de commande d'injection de carburant dans une chambre de combustion d'une turbomachine, la turbomachine comprenant un circuit d'alimentation en carburant d'un système d'injection de la chambre de combustion, ledit circuit d'alimentation comprenant une ligne d'injection pilote et une ligne d'injection principale entre lesquelles sont réparties l'alimentation en carburant de la chambre de combustion,
dans lequel procédé de commande, une transition de la répartition de l'alimentation entre la ligne d'injection pilote et la ligne d'injection principale d'une première valeur de répartition vers une deuxième valeur de répartition est réalisée sur une période de temps correspondante, la répartition de l'alimentation ayant la deuxième valeur de répartition à l'issu de la période de temps correspondante

Le procédé de commande comprend, pour une transition de la répartition de l'alimentation d'une première valeur de répartition vers une deuxième valeur de répartition pour laquelle la répartition en carburant de la ligne d'injection pilote est réduite par rapport à celle de cette même ligne d'injection pilote pour la première valeur de répartition, les étapes suivantes:
a) détermination d'au moins une valeur minimale à maintenir d'une grandeur de pression du circuit d'alimentation pendant au moins une partie de la période de temps,
b) détermination d'au moins une grandeur hydraulique du circuit d'alimentation,
c) calcul, à partir de la grandeur hydraulique du circuit d'alimentation déterminée, d'une valeur calculée de répartition de l'alimentation en carburant correspondant à la valeur minimale à maintenir de la grandeur de pression, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation en carburant à la valeur calculée de répartition,
au moins les étapes b) à d) étant répétées successivement pendant toute la durée de la période de temps correspondante.

Avec un tel procédé, le passage de la première à la deuxième valeur pendant la période de temps correspondante, c'est-à-dire la période de temps prédéterminée pendant laquelle le passage de la première à la deuxième valeur doit avoir lieu, est réalisé de manière à préserver la pression minimale dans le circuit d'alimentation. Avec une telle pression préservée, l'actionnement des vérins est assuré sans avoir à nécessairement un dimensionnement à la hausse des vérins comme cela est le cas dans les procédés de l'art antérieur.

Lors de l'étape c) de calcul, à partir de la grandeur hydraulique du circuit d'alimentation déterminée, d'une valeur calculée de répartition de l'alimentation en carburant correspondant à la valeur minimale à maintenir de la grandeur de pression, la valeur calculée de répartition peut être intermédiaire entre la première valeur de répartition et la deuxième valeur de répartition.

On notera que la valeur minimale à maintenir d'une grandeur de pression du circuit d'alimentation pendant au moins une partie de la période de temps est une valeur minimale de pression nécessaire pour actionner au moins une partie des actionneurs hydrauliques de la turbomachine.

L'étape c) de calcul de la valeur calculée de répartition de l'alimentation en carburant peut comporter les sous étapes suivantes :
- calcul à partir de la grandeur hydraulique du circuit d'alimentation déterminée et d'une valeur actuelle de la répartition de l'alimentation en carburant, d'une valeur actuelle de la grandeur de pression du circuit d'alimentation,
- comparaison de la valeur actuelle calculée de la grandeur de pression du circuit d'alimentation avec la valeur minimale à maintenir de la grandeur de pression du circuit d'alimentation déterminée,
- calcul, à partir du résultat de la comparaison, de la valeur calculée de répartition de l'alimentation en carburant correspondant à la valeur minimale à maintenir.

L'étape c) de calcul de la valeur calculée de répartition de l'alimentation en carburant peut consister en une étape de calcul de ladite valeur calculée de répartition de l'alimentation en carburant à partir de l'au moins une grandeur hydraulique du circuit d'alimentation en carburant déterminée et de la valeur minimale à maintenir de la grandeur de pression du circuit d'alimentation déterminée.

De cette manière avec ces deux variantes de l'étape c), il est possible d'obtenir un changement rapide de la répartition de l'alimentation tout en assurant que la pression dans le circuit d'alimentation reste suffisante pour garantir un bon actionnement des vérins hydraulique.

La grandeur de pression peut être choisie parmi une valeur de pression du circuit d'alimentation et une valeur de force développée par un vérin alimenté par le circuit d'alimentation, et la grandeur hydraulique du circuit d'alimentation est une valeur du débit d'alimentation en carburant de la chambre d'injection.

Lors de la répétition successive des étapes b) à d), l'étape a) peut également être répétée, celle-ci permettant de déterminer une valeur minimale à maintenir de la grandeur de pression du circuit d'alimentation en carburant pendant une fraction de période de la période de temps correspondant.

De cette manière, le système d'alimentation est apte à assurer un bon actionnement pendant toute la période de temps correspondante quelles que soient les évolutions de la configuration de la turbomachine.

L'invention concerne en outre un circuit d'alimentation en carburant pour une turbomachine, le circuit de carburant comportant :
- une ligne d'injection pilote destinée à alimenter une partie pilote d'un système d'injection d'une chambre de combustion de la turbomachine,
- une ligne d'injection principale destinée à alimenter une partie principale du système d'injection de la chambre de combustion,
- un dispositif de répartition de l'alimentation en carburant configuré pour commander la répartition en carburant entre la ligne d'injection pilote et la ligne d'injection principale,
- une unité de commande apte à commander le dispositif de répartition de l'alimentation et à faire une mesure de certaines grandeurs hydrauliques du circuit d'alimentation,
l'unité de commande étant configurée pour commander le système de répartition de manière à fournir une transition de la répartition de l'alimentation entre la ligne d'injection pilote et la ligne d'injection principale d'une première valeur de répartition vers une deuxième valeur de répartition sur une période de temps correspondante, la répartition de l'alimentation ayant la deuxième valeur répartition à l'issue de la période de temps correspondante.

L'unité de commande est en outre configurée pour, lors d'une commande du système de répartition en carburant pour effectuer une transition de la répartition de l'alimentation d'une première valeur de répartition vers une deuxième valeur de répartition pour laquelle la répartition en carburant de la ligne d'injection pilote est réduite par rapport à celle de cette même ligne d'injection pilote pour la première valeur de répartition, mettre en œuvre les étapes suivantes :
a) déterminerau moins une valeur minimale à maintenir d'une grandeur de pression du circuit d'alimentation pendant au moins une partie de la période de temps correspondant,
b) détermination d'au moins une grandeur hydraulique du circuit d'alimentation,
c) calcul, à partir de la grandeur hydraulique du circuit d'alimentation déterminée, d'une valeur calculée de répartition de l'alimentation en carburant correspondant à la valeur minimale à maintenir de la grandeur de pression, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation à la valeur calculée de répartition de l'alimentation,
l'unité de commande étant en outre configurée pour répéter les étapes b) à d) successivement pendant toute la durée de la période de temps correspondante.

Un tel circuit d'alimentation permet la mise en œuvre d'un procédé d'alimentation selon l'invention et de bénéficier des avantages qui y sont liés.
l'unité de commande peut en outre être configurée pour que, lors de l'étape c) de calcul, à partir de la grandeur hydraulique du circuit d'alimentation déterminée, d'une valeur calculée de répartition de l'alimentation en carburant correspondant à la valeur minimale à maintenir de la grandeur de pression, la valeur calculée de répartition soit intermédiaire entre la première valeur de répartition et la deuxième valeur de répartition.

L'unité de commande peut comporter :
- un module de détermination de la pression minimale configuré pour déterminer une valeur minimale à maintenir de la grandeur de pression du circuit d'alimentation pendant au moins une partie de la période de temps correspondant,
- un module de calcul configuré pour calculer à partir d'une grandeur hydraulique du circuit d'alimentation déterminée et d'une valeur actuelle de la répartition de l'alimentation en carburant, une valeur actuelle de la grandeur de pression du circuit d'alimentation,
- un module de comparaison configuré pour comparer la valeur actuelle calculée de la grandeur de pression du circuit d'alimentation avec la valeur minimale à maintenir de la grandeur de pression du circuit d'alimentation déterminée, et pour calculer, à partir du résultat de la comparaison, une valeur calculée de répartition de l'alimentation en carburant correspondant à la valeur minimale à maintenir de la grandeur de pression du circuit d'alimentation déterminée.

L'unité de commande est un calculateur de turbomachine.

L'invention concerne une turbomachine comprenant une chambre d'injection, ladite chambre d'injection comprenant un système d'injection, ladite turbomachine comprenant en outre un circuit d'alimentation en carburant selon l'invention alimentant en carburant le système d'injection.

Une telle turbomachine bénéficie des avantages liés au circuit d'alimentation en carburant qu'elle comporte.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- les figures 1A à 1C illustrent graphiquement la variation de certains paramètres d'une turbomachine et d'un circuit d'alimentation de l'art antérieur équipant ladite turbomachine lors d'un passage de ladite turbomachine d'un bas régime à un haut régime, la figure 1A figurant la variation dans le temps du régime de la turbomachine et du débit de carburant injecté dans la chambre de combustion, la figure 1B figurant la variation dans le temps de la répartition de l'alimentation en carburant entre une ligne d'alimentation pilote et une ligne d'alimentation principale,
- la figure 2 est une vue schématique en section axiale d'une turbomachine pour aéronef selon un premier mode de réalisation de l'invention ;
- la figure 3 un vue schématique des éléments constituant un circuit d'alimentation en carburant d'une turbomachine selon le premier mode de réalisation,
- la figure 4 est un schéma fonctionnel d'une unité de commande selon le premier mode de réalisation de l'invention,
- la figure 5 est un schéma fonctionnel d'une unité de commande selon un deuxième mode de réalisation,
- les figures 6A et 6B illustrent une comparaison entre une transition de la répartition en carburant selon l'art antérieur et une transition de la répartition en carburant selon l'invention de respectivement avec, sur la figure 6A, la variation dans le temps de la répartition de l'alimentation en carburant et, sur la figure 6B, de la pression du circuit d'alimentation en carburant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

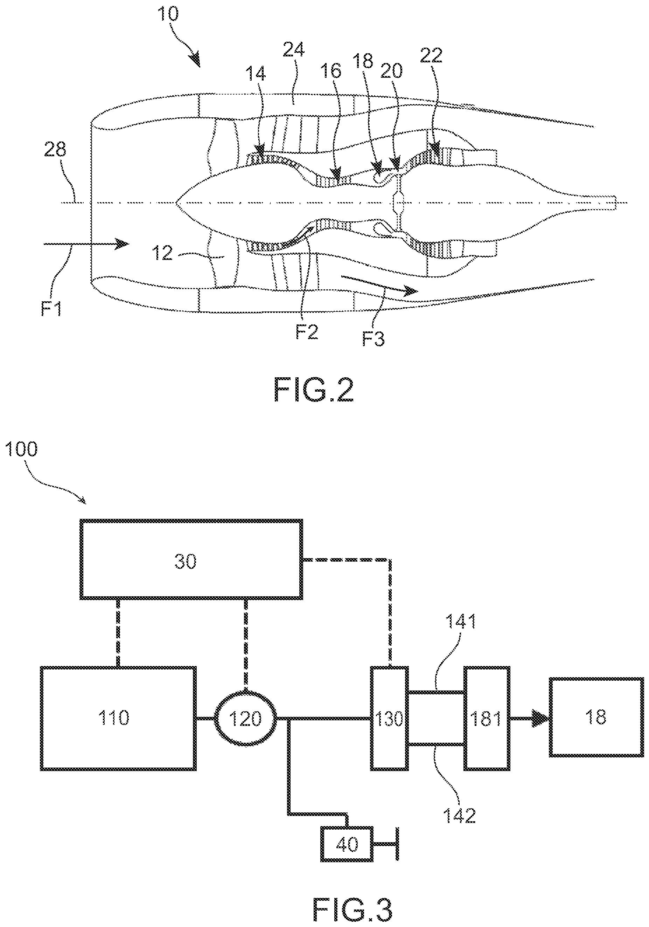

La figure 2 illustre une turbomachine, par exemple un turboréacteur à double flux 10 pour aéronef, comportant de manière générale une soufflante 12 destinée à l'aspiration d'un flux d'air F1 se divisant en aval de la soufflante en un flux primaire F2 alimentant un cœur du turboréacteur et un flux secondaire F3 contournant ce cœur et destiné à fournir en principe la majeure partie de la poussée.

Le cœur du turboréacteur comporte, de manière bien connue, un compresseur basse pression 14, un compresseur haute pression 16, une chambre de combustion 18 par exemple du type annulaire, une turbine haute pression 20 et une turbine basse pression 22. Le turboréacteur est caréné par une nacelle 24 entourant l'espace d'écoulement 26 du flux secondaire. Les rotors du turboréacteur sont montés rotatifs autour d'un axe longitudinal 28 du turboréacteur.

L'invention est néanmoins applicable à tout type de turbomachine.

La chambre de combustion 18 est alimentée en carburant par un circuit d'alimentation en carburant 100 illustré schématique sur la figure 3 et des dispositifs d'injection de carburant 181, généralement appelés injecteurs. Chacun des dispositifs d'injection comprend un canal d'éjection de carburant, non illustré, apte à pulvériser du carburant dans la chambre de combustion, par exemple au travers d'orifices correspondants, non illustrés, ménagés dans une paroi de fond de la chambre de combustion. À cet effet, les canaux d'éjection de carburant débouchent directement ou indirectement dans la chambre de combustion 18.

Comme décrit en lien avec l'art antérieur, ces dispositifs d'injection 181 présentent au moins une première et une deuxième partie, non représentées, configurées pour autoriser une alimentation de la chambre de combustion 18 selon un type d'alimentation respectif. La première partie correspond ainsi à un type d'alimentation pilote dédié au faible régime et la deuxième partie correspond à un type d'alimentation principal dédié au haut régime et adapté pour optimiser le taux de combustion de la chambre à ces haut régime de manière à réduire la pollution générée. Ces première et deuxième parties peuvent être :
- soit chacune constituée par des dispositifs d'injection 181 dédiés au type d'alimentation correspondant,
- soit, selon une possibilité préférentielle de l'invention, chacune constituée par une partie de chaque dispositif d'injection 181 qui est dédiée au type d'alimentation correspondant.

Selon cette dernière possibilité, chaque dispositif d'injection 181 peut comporter, par exemple, deux types d'orifices alimentés par un canal d'éjection correspondant :
- un orifice central de dimension relativement importante formant, avec le canal d'éjection correspondant la première partie dudit dispositif d'injection 181,
- des orifices périphériques à l'orifice central et répartis autour de ce même orifice central, ces orifices périphériques formant avec le canal d'éjection correspondant la deuxième partie dudit dispositif d'injection 181.

Quel que soit la configuration de ces dispositifs d'injection 181, la répartition de l'alimentation en carburant de chacune de la première et la deuxième partie est fournie par le circuit d'alimentation en carburant 100.

Le circuit d'alimentation en carburant 100 comprend, comme montré sur la figure 3 :
- un système de mise en pression 110 du carburant apte à alimenter en carburant le circuit d'alimentation en carburant 100 à partir de carburant fourni par l'aéronef équipé de la turbomachine, et à commander l'actionnement de vérins 40 de la turbomachine,
- un débitmètre 120 adapté pour mesurer le débit du carburant transitant dans le circuit d'alimentation en carburant 100, le débit formant une grandeur hydraulique du circuit d'alimentation 100,
- un dispositif de répartition de l'alimentation 130 en carburant configuré pour commander la répartition en carburant en direction des première et deuxième parties des dispositifs d'injection 181,
- une ligne d'injection pilote 141 configurée pour alimenter en carburant la première partie des dispositifs d'injection 181,
- une ligne d'injection principale 142 configurée pour alimenter en carburant la deuxième partie des dispositifs d'injection 181,
- une unité de commande 30 apte à commander le dispositif de répartition 130 et à faire une mesure de certaines grandeurs hydrauliques du circuit d'alimentation 100, notamment le débit en carburant dans le circuit d'alimentation 100 à partir du débitmètre 120.

Ainsi, conformément au présent mode de réalisation, la grandeur hydraulique du circuit d'alimentation 100 peut être le débit de carburant dans le circuit d'alimentation en amont du dispositif de répartition de l'alimentation 130. Selon cette possibilité, cette grandeur hydraulique du circuit d'alimentation 100 peut être le débit au niveau de la canalisation alimentant les vérins 40. Une telle valeur permet d'obtenir une bonne estimation du muscle hydraulique desdits vérins 40.

Bien entendu, l'unité de commande 30 peut également être apte à commander le dispositif de répartition 130 et à faire une mesure d'une autre grandeur hydraulique que le débit en carburant, par exemple la pression du carburant dans le circuit d'alimentation 100 ceci à l'aide d'un manomètre. En alternative, la grandeur hydraulique mesurée peut consister en la répartition du carburant entre la ligne d'injection pilote et la ligne d'injection principale. Par exemple, si le dispositif de répartition est formé par une vanne munie d'un obturateur mobile sous la forme d'un tiroir coulissant dont la position régit la répartition, la mesure de la répartition du carburant peut s'effectuer en mesurant la position du tiroir. Selon une autre possibilité de l'invention, cette mesure de la répartition peut s'effectuer à l'aide de deux débitmètres disposés respectivement dans la ligne d'injection pilote 141 et la ligne d'injection principale 142.

La ligne d'injection pilote 141 est configurée pour alimenter en carburant la première partie des dispositifs d'injection 181 et la ligne d'injection principale 142 est configurée pour alimenter en carburant la deuxième partie des dispositifs d'injection 181. On notera également que le dispositif de répartition de l'alimentation 130 est configuré pour commander la répartition de carburant entre la ligne d'injection pilote 141 et la ligne d'injection principale 142.

Selon une configuration avantageuse de l'invention, l'unité de commande 30 est formée par un calculateur de la turbomachine. En variante, l'unité de commande 30 peut être formée par une électronique dédiée uniquement à la commande du circuit d'alimentation 100.

Dans la suite de ce document, dans un but d'allégement, une transition de la répartition de l'alimentation entre la ligne d'injection pilote 141 et la ligne d'injection principale 142 d'une première valeur de répartition vers une deuxième valeur de répartition pour laquelle la répartition en carburant de la ligne d'injection pilote 141 dans la deuxième valeur est réduite par rapport à celle de cette même ligne d'injection pilote 141 pour la première valeur de répartition, est dénommée « transition de réduction de la répartition pilote ».

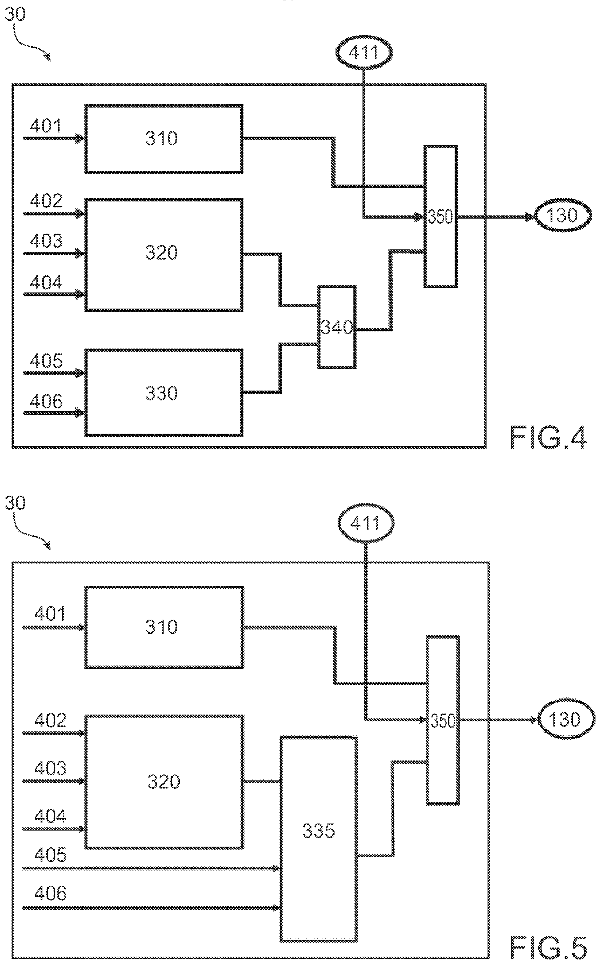

La figure 4 illustre un schéma fonctionnel de l'unité de commande 30. Ainsi l'unité de commande 30 comporte :
- un module de régulation de phase stabilisée 310 adapté pour commander les différents éléments du circuit d'alimentation en carburant 100 en dehors des phases de transition de réduction de la répartition pilote, ce module de régulation de phase stabilisée 310 étant configuré pour fournir une commande de la répartition de l'alimentation en carburant entre la ligne d'injection pilote 141 et la ligne d'injection principale 142 similaire aux modules de commande de l'art antérieur,
- un module de détermination de la pression minimale 320 à maintenir d'une grandeur de pression du circuit d'alimentation en carburant, telle que la pression du circuit d'alimentation 100, durant une phase de transition de réduction de la répartition pilote à partir d'une configuration de la turbomachine, ladite configuration comportant notamment une information d'état de régime de la turbomachine 402, une information de position 403 des vérins 40 et une information de commande 404 de déplacement des vérins 40, ladite pression minimale à maintenir formant une valeur minimale à maintenir,
- un module de calcul 330 configuré pour calculer à partir de la grandeur hydraulique du circuit d'alimentation 100 et d'une valeur actuelle de la répartition de l'alimentation en carburant, une valeur actuelle de la grandeur de pression du circuit d'alimentation 100,
- un module de comparaison 340 configuré pour comparer la valeur déterminée de la grandeur de pression du circuit d'alimentation 100 et la valeur actuelle calculée de la grandeur de pression du circuit d'alimentation 100 et pour calculer, à partir du résultat de la comparaison, une valeur calculée de répartition de l'alimentation en carburant correspondant à la valeur minimale à maintenir,
- un système de sélection 350 configuré pour, à partir d'au moins une valeur d'état 411 de la turbomachine caractéristique d'une transition de réduction de la répartition, sélectionner une valeur de commande de la répartition en alimentation parmi celle fournie par le module de régulation de phase stabilisée 310 et la valeur calculée par le module de comparaison 340.

Chacun des modules 310, 320, 330, 340 est fourni soit par un circuit dédié de l'unité de commande 30, soit par un module logiciel installé sur ladite unité de commande 30.

Selon une possibilité de l'invention la grandeur de pression du circuit d'alimentation 100 peut être aussi bien une valeur de pression du circuit d'alimentation qu'une valeur de force développée par un vérin 40 alimenté par le circuit d'alimentation 100.

On notera que la valeur d'état 411 est une grandeur caractéristique d'un état correspondant à une transition de réduction de la répartition pilote. Selon une configuration classique, la valeur d'état peut prendre une valeur 1 (ou 0) pendant toute la durée de la transition de réduction de la répartition pilote et une valeur 0 (ou 1) en dehors. Selon une autre possibilité, cette valeur d'état 411 peut comporter une pluralité d'états correspondant à des états de la turbomachine 18 pour lequel une transition de réduction de la répartition pilote est réalisée, et au moins un état pour lequel la turbomachine 18 est en dehors d'une transition de réduction de la répartition pilote.

Concernant le module de détermination de la pression minimale 320, cette détermination peut être réalisée en fonction de l'état de la turbomachine et de manière empirique, les valeurs de la grandeur de pression ayant alors étaient déterminées expérimentalement lors d'expériences préalables en usine. En variante, cette détermination peut être réalisée :
- à partir de simulations en usine permettant de définir des lois concernant les valeur de grandeur de pression minimale pendant une transition de réduction de la répartition pilot,
- à partir de valeurs considérées comme sécuritaires, celle-ci étant surévaluée de manière à garantir une commande des vérins quelle que soit les contraintes appliquées aux vérins.

Le module de calcul 330 est configuré pour calculer la valeur actuelle de la grandeur de pression du circuit d'alimentation 100 sur la base, par exemple, d'un modèle permettant de déterminer en continu le niveau de pression à partir du débit de carburant et d'une valeur de la répartition de l'alimentation entre la ligne d'injection pilote 141 et la ligne d'injection principale 142.

Avec une telle configuration l'unité de commande 30 est configurée pour commander le système de répartition 130 de l'alimentation de manière à fournir une transition de la répartition de l'alimentation entre la ligne d'injection pilote 141 et la ligne d'injection principale 142 d'une première valeur de répartition vers une deuxième valeur de répartition sur une période de temps correspondante, la répartition de l'alimentation ayant la deuxième valeur répartition à l'issu de la période de temps correspondante .

Qui plus est, l'unité de commande 30 est configurée pour, lors d'une transition de réduction de la répartition pilote, pour mettre en œuvre les étapes suivantes :
a) détermination au moins une valeur minimale à maintenir de la grandeur de pression du circuit d'alimentation 100 pendant au moins une partie de la période de temps tt correspondante,
b) détermination d'au moins une grandeur hydraulique du circuit d'alimentation 100, ladite grandeur hydraulique étant, par exemple, le débit en carburant dans le circuit d'alimentation 100,
c) à partir d'au moins une grandeur hydraulique du circuit d'alimentation 100, détermination d'une valeur calculée de répartition de l'alimentation correspondant à la valeur minimale à maintenir de la grandeur de pression, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation en carburant à la valeur calculée de répartition de l'alimentation.

L'unité de commande 30 est en outre configurée pour répéter les étapes b) à d) successivement pendant toute la durée de la période de temps correspondante.

Autrement dit et selon l'invention, avec une telle configuration du circuit d'alimentation 100, l'unité de commande 30 permet la mise en œuvre d'un procédé d'alimentation en carburant d'une turbomachine comportant, lors d'une transition de réduction de la répartition pilote, les étapes suivantes:
a) détermination d'au moins une valeur minimale à maintenir d'une grandeur de pression du circuit d'alimentation en carburant pendant au moins une partie de la période de temps,
b) détermination d'au moins une grandeur hydraulique du circuit d'alimentation,
c) calcul, à partir de la grandeur hydraulique du circuit d'alimentation 100 déterminée, d'une valeur calculée de répartition de l'alimentation en carburant correspondant à la valeur minimale à maintenir, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation en carburant à la valeur calculée de répartition de l'alimentation,
les étapes b) à d) étant répétées successivement pendant toute la durée de la période de temps correspondante.

On notera, qu'en variante, lors de l'étape c) de calcul, à partir de la grandeur hydraulique du circuit d'alimentation 100 déterminée, d'une valeur calculée de répartition de l'alimentation en carburant correspondant à la valeur minimale à maintenir, la valeur calculée de répartition peut être intermédiaire entre la première valeur de répartition et la deuxième valeur de répartition.

On notera également que la valeur minimale à maintenir d'une grandeur de pression du circuit d'alimentation peut être une valeur minimale de pression nécessaire pour actionner au moins une partie des actionneurs hydrauliques de la turbomachine, c'est-à-dire les vérins 40.

Selon ce premier mode de réalisation, l'étape c) de détermination d'une valeur calculée de répartition de l'alimentation en carburant comporte les sous étapes suivantes :
- calcul à partir de la grandeur hydraulique du circuit d'alimentation déterminée et d'une valeur actuelle de la répartition de l'alimentation en carburant, une valeur actuelle de la grandeur de pression du circuit d'alimentation,
- comparaison de la valeur actuelle calculée de la grandeur de pression calculée de pression du circuit d'alimentation avec la valeur minimale à maintenir d'une grandeur de pression du circuit d'alimentation déterminée,
- calcul, à partir du résultat de la comparaison, de la valeur calculée de répartition de l'alimentation en carburant correspondant à la valeur minimale à maintenir.

Selon une possibilité de l'invention, il est également envisageable que lors de la répétition successive des étapes b) à d), l'étape a) soit également répétée. Selon cette possibilité l'étape a) permet de déterminer une valeur minimale à maintenir d'une grandeur de pression du circuit d'alimentation en carburant pendant à une fraction de période de donné de la période de temps.

La figure 4 illustre un schéma fonctionnel d'une unité de commande 30 d'un circuit d'alimentation en carburant 100 selon un deuxième mode de réalisation de l'invention. Un circuit d'alimentation en carburant 100 selon ce deuxième mode de réalisation se différencie d'un circuit d'alimentation en carburant 100 selon le premier mode de réalisation en ce que l'unité de commande présente, en lieu et place du module de calcul 330 et du module de comparaison, un module de calcul direct 335.

Le module de calcul direct 335 est configuré pour calculer une valeur calculée de répartition de l'alimentation en carburant à partir de l'au moins une grandeur hydraulique du circuit d'alimentation en carburant déterminée et de la valeur minimale à maintenir d'une grandeur de pression du circuit d'alimentation déterminée.

Selon ce deuxième mode de réalisation le système de sélection 350 configuré pour, à partir de l'au moins une valeur d'état 411 de la turbomachine caractéristique d'une transition de réduction de la répartition, sélectionner une valeur de commande de la répartition en alimentation parmi celle fournie par le module de régulation de phase stabilité 310 et la valeur calculée par le module de calcul direct 335.

Le calcul de la valeur calculée de répartition de l'alimentation en carburant peut être réalisé sur la base d'une équation découlant directement ou indirectement de l'équation (1)

Ainsi, selon ce deuxième mode de réalisation, le procédé de commande de l'alimentation en carburant se différencie d'un procédé de commande de l'alimentation en carburant selon le premier mode de réalisation en ce que l'étape c) de détermination d'une valeur calculée de répartition de l'alimentation en carburant consiste en: une étape de calcul de ladite valeur calculée de répartition de l'alimentation en carburant à partir de l'au moins une grandeur hydraulique du circuit d'alimentation en carburant déterminée et de la valeur minimale à maintenir d'une grandeur de pression du circuit d'alimentation déterminée.

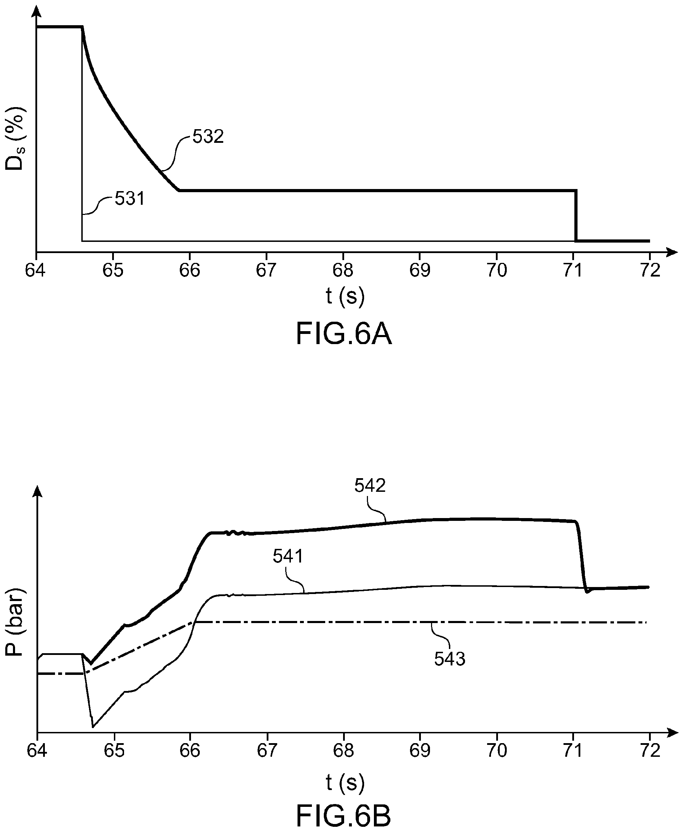

Que ce soit le circuit d'alimentation en carburant 100 soit selon le premier mode de réalisation ou selon le deuxième mode de réalisation, un tel circuit d'alimentation 100 permet de fournir, lors d'une transition de réduction de la répartition pilote et comme illustré sur les figures 6A et 6B, une pression dans le circuit d'alimentation en carburant compatible avec les besoins en pression pour permettre le déplacement des vérins 40.

En effet, les figures 6A et 6B illustrent une telle comparaison avec, en figure 6A, la variation dans de le temps de la répartition de l'alimentation en carburant 531 532 et, en figure 6B, de la pression 541, 542 du circuit d'alimentation 100. La figure 6B montre également, en pointillés, le résultat d'une détermination de la valeur de pression minimale 543 du circuit d'alimentation 100 nécessaire pendant la transition de réduction de la répartition pilote.

On notera qu'une telle valeur minimale nécessaire 543 peut être différente de la valeur minimale à maintenir selon l'invention puisque, selon l'invention, la valeur minimale à maintenir peut correspondre à la valeur minimale nécessaire à laquelle s'ajoute une réserve de pression.

On peut voir sur la figure 6B, qu'avec un procédé de l'art antérieur dans lequel la transition d'alimentation en carburant entre la ligne d'injection pilote 141 et la ligne d'injection principale 142 est abrupte, comme celle illustrée sur la figure 6A, cette transition entraîne une forte baisse de la pression dans le circuit d'alimentation 100 et celle-ci devient inférieure à la valeur minimale de pression nécessaire. Les déplacements des vérins 40 s'en trouvant donc partiellement compris. Après cette forte baisse de la pression, l'augmentation du débit de carburant dans le circuit d'alimentation 100 aboutit à une augmentation de la pression et permet, après une période de temps relativement importante d'atteindre la valeur minimale nécessaire. Les déplacements des vérins 40 s. Néanmoins, on peut voir qu'avec le procédé de l'art antérieur, la pression dans le circuit d'alimentation 100 reste inférieure à la valeur minimale de pression nécessaire pendant une période de temps relativement importante.

Dans le cadre de l'invention, de par la mise en œuvre du procédé selon l'invention, on peut voir que la baisse de la répartition de l'alimentation présente une baisse de l'alimentation de la ligne pilote qui est graduelle, ceci afin de maintenir la valeur de pression à la valeur de pression minimale à maintenir. Cette baisse graduelle est directement liée à l'augmentation du débit de carburant dans le circuit d'alimentation 100. Ainsi, une fois le débit de carburant stabilisé la répartition de l'alimentation 532 est également stabilisée par la mise en œuvre du procédé. On notera que, selon le principe de l'invention, à l'issu de la période de temps tt, la répartition de l'alimentation 532 est ramenée à la deuxième valeur.

On notera que si un tel procédé est particulièrement avantageux dans le cas d'une transition de réduction de la répartition pilote lié à une accélération de la turbomachine 10, c'est-à-dire lors d'un passage d'un bas régime à un haut régime, il est également avantageux lors d'autre phase de fonctionnement de la turbomachine. On citera ainsi, en particulier, les cas de :
- d'ingestion d'éléments extérieurs, tels qu'un oiseau, de l'eau de pluie/neige et de la grêle, l'alimentation de la turbomachine passant lors d'une telle ingestion à un régime de mélange dit « riche »,
- lors d'un décrochage tournant.

Ainsi, le circuit d'alimentation selon l'invention et le procédé qui est associé permet de fournir, quelle que soit la phase de la turbomachine 10 nécessitant une transition de réduction de la répartition pilote, de fournir la pression nécessaire aux vérins 40 afin d'assurer la réactivité nécessaire dans la commande en déplacement de ces vérins 40.

## Revendications

1. Procédé de commande d'injection de carburant dans une chambre de combustion (18) d'une turbomachine (10), la turbomachine (10) comprenant un circuit d'alimentation (100) en carburant d'un système d'injection de la chambre de combustion (18), ledit circuit d'alimentation (100) comprenant une ligne d'injection pilote (141) et une ligne d'injection principale (142) entre lesquelles est répartie l'alimentation en carburant de la chambre de combustion (18),
dans lequel procédé de commande, une transition de la répartition de l'alimentation entre la ligne d'injection pilote (141) et la ligne d'injection principale (142) d'une première valeur de répartition vers une deuxième valeur de répartition est réalisée sur une période de temps correspondante (tt), la répartition de l'alimentation ayant la deuxième valeur de répartition à l'issue de la période de temps correspondante (tt),
le procédé de commande comprenant, pour une transition de la répartition de l'alimentation d'une première valeur de répartition vers une deuxième valeur de répartition pour laquelle la répartition en carburant de la ligne d'injection pilote (141) est réduite par rapport à celle de cette même ligne d'injection pilote (141) pour la première valeur de répartition, les étapes suivantes:
a) détermination d'au moins une valeur minimale à maintenir d'une grandeur de pression du circuit d'alimentation (100) pendant au moins une partie de la période de temps,
b) détermination d'au moins une grandeur hydraulique du circuit d'alimentation (100),
c) calcul, à partir de la grandeur hydraulique du circuit d'alimentation (100) déterminée, d'une valeur calculée de répartition de l'alimentation en carburant correspondant à la valeur minimale à maintenir de la grandeur de pression, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation en carburant à la valeur calculée de répartition,
au moins les étapes b) à d) étant répétées successivement pendant toute la durée de la période de temps correspondante (tt),
dans lequel la valeur minimale à maintenir d'une grandeur de pression du circuit d'alimentation pendant au moins une partie de la période de temps est une valeur minimale de pression nécessaire pour actionner au moins une partie des actionneurs hydrauliques de la turbomachine.

2. Procédé de commande d'injection de carburant selon la revendication 1, dans lequel, lors de l'étape c) de calcul, à partir de la grandeur hydraulique du circuit d'alimentation (100) déterminée, d'une valeur calculée de répartition de l'alimentation en carburant correspondant à la valeur minimale à maintenir de la grandeur de pression, la valeur calculée de répartition est intermédiaire entre la première valeur de répartition et la deuxième valeur de répartition.

3. Procédé de commande d'injection de carburant selon la revendication 1 ou 2, dans lequel l'étape c) de calcul de la valeur calculée de répartition de l'alimentation en carburant comporte les sous étapes suivantes :
- calcul à partir de la grandeur hydraulique du circuit d'alimentation (100) déterminée et d'une valeur actuelle de la répartition de l'alimentation en carburant, d'une valeur actuelle de la grandeur de pression du circuit d'alimentation (100),
- comparaison de la valeur actuelle calculée de la grandeur de pression du circuit d'alimentation avec la valeur minimale à maintenir de la grandeur de pression du circuit d'alimentation déterminée,
- calcul, à partir du résultat de la comparaison, de la valeur calculée de répartition de l'alimentation en carburant correspondant à la valeur minimale à maintenir.

4. Procédé de commande d'injection selon la revendication 1 ou 2, dans lequel l'étape c) de calcul de la valeur calculée de répartition de l'alimentation en carburant consiste en une étape de calcul de ladite valeur calculée de répartition de l'alimentation en carburant à partir de l'au moins une grandeur hydraulique du circuit d'alimentation en carburant déterminée et de la valeur minimale à maintenir de la grandeur de pression du circuit d'alimentation déterminée.

5. Procédé de commande d'injection de carburant selon l'une quelconque des revendications 1 à 4, dans lequel la grandeur de pression est choisie parmi une valeur de pression du circuit d'alimentation et une valeur de force développée par un vérin alimenté par le circuit d'alimentation, et la grandeur hydraulique du circuit d'alimentation est une valeur du débit d'alimentation en carburant de la chambre d'injection (18).

6. Procédé de commande d'injection de carburant selon l'une quelconque de revendication 1 à 5, dans lequel lors de la répétition successive des étapes b) à d), l'étape a) est également répétée, celle-ci permettant de déterminer une valeur minimale à maintenir de la grandeur de pression du circuit d'alimentation en carburant pendant une fraction de période de la période de temps (tt) correspondant.

7. Circuit d'alimentation (100) en carburant pour une turbomachine, le circuit de carburant comportant :
- une ligne d'injection pilote (141) destinée à alimenter une partie pilote d'un système d'injection d'une chambre de combustion de la turbomachine,
- une ligne d'injection principale (142) destinée à alimenter une partie principale du système d'injection de la chambre de combustion,
- un dispositif de répartition de l'alimentation (130) en carburant configuré pour commander la répartition en carburant entre la ligne d'injection pilote (141) et la ligne d'injection principale (142),
- une unité de commande (30) apte à commander le dispositif de répartition de l'alimentation (130) et à faire une mesure de certaines grandeurs hydrauliques du circuit d'alimentation (100),
l'unité de commande (30) étant configurée pour commander le système de répartition (130) de manière à fournir une transition de la répartition de l'alimentation entre la ligne d'injection pilote (141) et la ligne d'injection principale (142) d'une première valeur de répartition vers une deuxième valeur de répartition sur une période de temps correspondante (tt), la répartition de l'alimentation ayant la deuxième valeur répartition à l'issue de la période de temps correspondante,
le circuit d'alimentation en carburant (100) **étant caractérisé en ce que** l'unité de commande (30) est en outre configurée pour, lors d'une commande du système de répartition (130) en carburant pour effectuer une transition de la répartition de l'alimentation d'une première valeur de répartition vers une deuxième valeur de répartition pour laquelle la répartition en carburant de la ligne d'injection pilote (141) est réduite par rapport à celle de cette même ligne d'injection pilote (141) pour la première valeur de répartition, mettre en œuvre les étapes suivantes :
a) déterminer au moins une valeur minimale à maintenir d'une grandeur de pression du circuit d'alimentation (100) pendant au moins une partie de la période de temps correspondant (tt),
b) détermination d'au moins une grandeur hydraulique du circuit d'alimentation (100),
c) calcul, à partir de la grandeur hydraulique du circuit d'alimentation (100) déterminée, d'une valeur calculée de répartition de l'alimentation en carburant correspondant à la valeur minimale à maintenir de la grandeur de pression, la valeur calculée de répartition étant choisie dans une plage de valeurs définie entre la première valeur de répartition et la deuxième valeur de répartition, ladite plage de valeurs incluant les première et deuxième valeurs de répartition,
d) passage de la répartition de l'alimentation à la valeur calculée de répartition de l'alimentation,
l'unité de commande (30) étant en outre configurée pour répéter les étapes b) à d) successivement pendant toute la durée de la période de temps correspondante (tt),
dans lequel la valeur minimale à maintenir d'une grandeur de pression du circuit d'alimentation pendant au moins une partie de la période de temps est une valeur minimale de pression nécessaire pour actionner au moins une partie des actionneurs hydrauliques de la turbomachine.

8. Circuit d'alimentation (100) selon la revendication 7, dans lequel l'unité de commande (30) est en outre configurée pour que, lors de l'étape c) de calcul, à partir de la grandeur hydraulique du circuit d'alimentation (100) déterminée, d'une valeur calculée de répartition de l'alimentation en carburant correspondant à la valeur minimale à maintenir de la grandeur de pression, la valeur calculée de répartition soit intermédiaire entre la première valeur de répartition et la deuxième valeur de répartition.

9. Circuit d'alimentation (100) selon la revendication 7 ou 8 dans lequel l'unité de commande (30) comporte :
- un module de détermination de la pression minimale (320) configuré pour déterminer une valeur minimale à maintenir de la grandeur de pression du circuit d'alimentation (100) pendant au moins une partie de la période de temps correspondant (tt),
- un module de calcul (330) configuré pour calculer à partir d'une grandeur hydraulique du circuit d'alimentation (100) déterminée et d'une valeur actuelle de la répartition de l'alimentation en carburant, une valeur actuelle de la grandeur de pression du circuit d'alimentation (100),
- un module de comparaison (340) configuré pour comparer la valeur actuelle calculée de la grandeur de pression du circuit d'alimentation (100) avec la valeur minimale à maintenir de la grandeur de pression du circuit d'alimentation (100) déterminée, et pour calculer, à partir du résultat de la comparaison, une valeur calculée de répartition de l'alimentation en carburant correspondant à la valeur minimale à maintenir de la grandeur de pression du circuit d'alimentation (100) déterminée.

10. Circuit d'alimentation (100) selon la revendication 7 ou 8, dans lequel l'unité de commande (30) comporte
- un module de détermination de la pression minimale (320) configuré pour déterminer une valeur minimale à maintenir de la grandeur de pression du circuit d'alimentation (100) pendant au moins une partie de la période de temps correspondant (tt),
- un module de calcul direct (335) configuré pour calculer une valeur calculée de répartition de l'alimentation en carburant à partir de l'au moins une grandeur hydraulique du circuit d'alimentation (100) déterminée et de la valeur minimale à maintenir de la grandeur de pression du circuit d'alimentation (100) déterminée.

11. Circuit d'alimentation (100) selon l'une quelconque des revendications 7 à 10 dans lequel l'unité de commande (30) est un calculateur de turbomachine.

12. Turbomachine (10) comprenant une chambre d'injection (18), ladite chambre d'injection (18) comprenant un système d'injection, ladite turbomachine (10) **étant caractérisée en ce qu'**elle comprend en outre un circuit d'alimentation en carburant (100) selon l'une quelconque des revendication 7 à 11 alimentant en carburant le système d'injection.

## Patentansprüche

1. Verfahren zur Steuerung der Kraftstoffeinspritzung in eine Brennkammer (18) einer Turbomaschine (10), wobei die Turbomaschine (10) einen Kraftstoffversorgungskreislauf (100) eines Einspritzsystems der Brennkammer (18) aufweist, wobei der Versorgungskreislauf (100) eine Voreinspritzleitung (141) und eine Haupteinspritzleitung (142) aufweist, zwischen welchen die Kraftstoffversorgung der Brennkammer (18) aufgeteilt wird,
wobei in dem Steuerungsverfahren ein Übergang der Versorgungsaufteilung zwischen der Voreinspritzleitung (141) und der Haupteinspritzleitung (142) von einem ersten Aufteilungswert zu einem zweiten Aufteilungswert über einen entsprechenden Zeitraum (tt) durchgeführt wird, wobei die Versorgungsaufteilung nach Ablauf des entsprechenden Zeitraums (tt) den zweiten Aufteilungswert aufweist,
wobei das Steuerungsverfahren für einen Übergang der Versorgungsaufteilung von einem ersten Aufteilungswert zu einem zweiten Aufteilungswert, bei dem die Kraftstoffaufteilung der Voreinspritzleitung (141) gegenüber derjenigen dieser Voreinspritzungsleitung (141) für den ersten Aufteilungswert verringert ist, die folgenden Schritte umfasst:
a) Bestimmung von mindestens einem Mindestwert zum Aufrechterhalten einer Druckgröße des Versorgungskreislaufs (100) während zumindest eines Teils des Zeitraums,
b) Bestimmung von mindestens einer Hydraulikgröße des Versorgungskreislaufs (100),
c) Berechnung, anhand der bestimmten Hydraulikgröße des Versorgungskreislaufs (100), eines berechneten Wertes der Kraftstoffversorgungsaufteilung entsprechend dem Mindestwert zum Aufrechterhalten der Druckgröße, wobei der berechnete Aufteilungswert in einem zwischen dem ersten Aufteilungswert und dem zweiten Aufteilungswert definierten Wertebereich ausgewählt wird, wobei der Wertebereich die ersten und zweiten Aufteilungswerte umfasst,
d) Wechsel der Aufteilung der Kraftstoffversorgung zu dem berechneten Aufteilungswert,
wobei zumindest die Schritte b) bis d) während der gesamten Dauer des entsprechenden Zeitraums (tt) aufeinanderfolgend wiederholt werden,
wobei der Mindestwert zum Aufrechterhalten einer Druckgröße des Versorgungskreislaufs während zumindest eines Teils des Zeitraums ein Mindestdruckwert ist, der zum Betätigen von zumindest einem Teil der hydraulischen Stellglieder der Turbomaschine erforderlich ist.

2. Verfahren zur Steuerung der Kraftstoffeinspritzung nach Anspruch 1, wobei bei dem Schritt c) der Berechnung, anhand der bestimmten hydraulischen Größe des Versorgungskreislaufs (100), eines berechneten Wertes der Aufteilung der Kraftstoffversorgung entsprechend dem Mindestwert zum Aufrechterhalten der Druckgröße, der berechnete Aufteilungswert zwischen dem ersten Aufteilungswert und dem zweiten Aufteilungswert liegt.

3. Verfahren zur Steuerung der Kraftstoffeinspritzung nach Anspruch 1 oder 2, wobei der Schritt c) der Berechnung des berechneten Wertes der Aufteilung der Kraftstoffversorgung die folgenden Teilschritte umfasst:
- Berechnung, anhand der bestimmten hydraulischen Größe des Versorgungskreislaufs (100) sowie eines aktuellen Wertes der Aufteilung der Kraftstoffversorgung, eines aktuellen Wertes der Druckgröße des Versorgungskreislaufs (100),
- Vergleich des berechneten aktuellen Wertes der Druckgröße des Versorgungskreislaufs mit dem Mindestwert zum Aufrechterhalten der bestimmten Druckgröße des Versorgungskreislaufs,
- Berechnung, anhand des Vergleichsergebnisses, des berechneten Wertes der Aufteilung der Kraftstoffversorgung entsprechend dem aufrechtzuerhaltenden Mindestwert.

4. Verfahren zur Steuerung der Einspritzung nach Anspruch 1 oder 2, wobei der Schritt c) der Berechnung des berechneten Wertes der Kraftstoffversorgungsaufteilung aus einem Schritt der Berechnung des berechneten Wertes der Kraftstoffversorgungsaufteilung anhand von mindestens einer bestimmten hydraulischen Größe des Kraftstoffversorgungskreislaufs sowie des Mindestwertes zum Aufrechterhalten der bestimmten Druckgröße des Versorgungskreislaufs besteht.

5. Verfahren zur Steuerung der Kraftstoffeinspritzung nach einem der Ansprüche 1 bis 4, wobei die Druckgröße aus einem Druckwert des Versorgungskreislaufs und einem Kraftwert ausgewählt ist, der von einem durch den Versorgungskreislauf gespeisten Zylinder erzeugt wird, und die hydraulische Größe des Versorgungskreislaufs ein Wert der Kraftstoffversorgungsmenge der Einspritzkammer (18) ist.

6. Verfahren zur Steuerung der Kraftstoffeinspritzung nach einem der Ansprüche 1 bis 5, wobei während der aufeinanderfolgenden Wiederholung der Schritte b) bis d) auch der Schritt a) wiederholt wird, wobei dieser die Bestimmung eines Mindestwertes zum Aufrechterhalten der Druckgröße des Kraftstoffversorgungskreislaufs während eines Bruchteils der Dauer des entsprechenden Zeitraums (tt) ermöglicht.

7. Versorgungskreislauf (100) mit Kraftstoff für eine Turbomaschine, wobei der Kraftstoffkreislauf Folgendes umfasst:
- eine Voreinspritzleitung (141) zur Versorgung eines Pilotteils eines Einspritzsystems einer Brennkammer der Turbomaschine,
- eine Haupteinspritzleitung (142) zur Versorgung eines Hauptteils des Einspritzsystems der Brennkammer,
- eine Vorrichtung zur Aufteilung der Kraftstoffversorgung (130), die zum Steuern der Kraftstoffaufteilung zwischen der Voreinspritzleitung (141) und der Haupteinspritzleitung (142) ausgeführt ist,
- eine Steuereinheit (30), die die Vorrichtung zur Aufteilung der Versorgung (130) steuern und eine Messung einiger hydraulischer Größen des Versorgungskreises (100) durchführen kann,
wobei die Steuereinheit (30) zum Steuern des Aufteilungssystems (130) derart ausgeführt ist, dass sie einen Übergang der Aufteilung der Versorgung zwischen der Voreinspritzleitung (141) und der Haupteinspritzleitung (142) von einem ersten Aufteilungswert zu einem zweiten Aufteilungswert über einen entsprechenden Zeitraum (tt) bereitstellt, wobei die Versorgungsaufteilung den zweiten Aufteilungswert nach Ablauf des entsprechenden Zeitraums aufweist,
wobei der Kraftstoffversorgungskreislauf (100) **dadurch gekennzeichnet ist, dass** die Steuereinheit (30) außerdem dazu ausgeführt ist, bei einer Steuerung des Kraftstoffaufteilungssystems (130) zum Bewirken eines Übergangs der Versorgungsaufteilung von einem ersten Aufteilungswert zu einem zweiten Aufteilungswert, für welchen die Kraftstoffaufteilung der Voreinspritzleitung (141) im Vergleich zu der derselben Voreinspritzleitung (141) für den ersten Aufteilungswert reduziert ist, die folgenden Schritte durchzuführen:
a) Bestimmen von mindestens einem Mindestwert zum Aufrechterhalten einer Druckgröße des Versorgungskreislaufs (100) während zumindest einem Bruchteil der Dauer des entsprechenden Zeitraums (tt),
b) Bestimmung von mindestens einer hydraulischen Größe des Versorgungskreislaufs (100),
c) Berechnung, anhand der bestimmten hydraulischen Größe des Versorgungskreislaufs (100), eines berechneten Wertes der Aufteilung der Kraftstoffversorgung entsprechend dem Mindestwert zum Aufrechterhalten der Druckgröße, wobei der berechnete Aufteilungswert aus einem zwischen dem ersten Aufteilungswert und dem zweiten Aufteilungswert definierten Wertebereich ausgewählt wird, wobei der Wertebereich die ersten und zweiten Aufteilungswerte umfasst,
d) Wechsel der Versorgungsaufteilung zu dem berechneten Wert der Versorgungsaufteilung,
wobei die Steuereinheit (30) außerdem dazu konfiguriert ist, die Schritte b) bis d) während der gesamten Dauer des entsprechenden Zeitraums (tt) aufeinanderfolgend zu wiederholen,
wobei der Mindestwert zum Aufrechterhalten einer Druckgröße des Versorgungskreislaufs während zumindest eines Teils des Zeitraums ein Mindestwert des Drucks ist, der zum Betätigen von mindestens einem Teil der hydraulischen Stellglieder der Turbomaschine erforderlich ist.

8. Versorgungskreislauf (100) nach Anspruch 7, wobei die Steuereinheit (30) außerdem dazu ausgeführt ist, dass bei dem Schritt c) der Berechnung, anhand der bestimmten hydraulischen Größe des Versorgungskreislaufs (100), eines berechneten Wertes der Aufteilung der Kraftstoffversorgung entsprechend dem Mindestwert zum Aufrechterhalten der Druckgröße, der berechnete Aufteilungswert zwischen dem ersten Aufteilungswert und dem zweiten Aufteilungswert liegt.

9. Versorgungskreislauf (100) nach Anspruch 7 oder 8, wobei die Steuereinheit (30) Folgendes aufweist:
- ein Modul zur Bestimmung des Mindestdrucks (320), das zum Bestimmen eines Mindestwertes zum Aufrechterhalten der Druckgröße des Versorgungskreislaufs (100) während zumindest eines Teils des entsprechenden Zeitraums (tt) ausgeführt ist,
- ein Berechnungsmodul (330), das zum Berechnen, anhand einer bestimmten hydraulischen Größe des Versorgungskreislaufs (100) und eines aktuellen Wertes der Kraftstoffversorgungsaufteilung, eines aktuellen Wertes der Druckgröße des Versorgungskreislaufs (100) ausgeführt ist,
- ein Vergleichsmodul (340), das zum Vergleichen des berechneten aktuellen Wertes der Druckgröße des Versorgungskreislaufs (100) mit dem Mindestwert zum Aufrechterhalten der bestimmten Druckgröße des Versorgungskreislaufs (100) sowie zum Berechnen, anhand des Vergleichsergebnisses, eines berechneten Wertes der Kraftstoffversorgungsaufteilung entsprechend dem Mindestwert zum Aufrechterhalten der bestimmten Druckgröße des Versorgungskreislaufs (100) ausgeführt ist.

10. Versorgungskreislauf (100) nach Anspruch 7 oder 8, wobei die Steuereinheit (30) Folgendes aufweist:
- ein Modul zur Bestimmung des Mindestdrucks (320), das zum Bestimmen eines Mindestwertes zum Aufrechterhalten der Druckgröße des Versorgungskreislaufs (100) während zumindest eines Teils des entsprechenden Zeitraums (tt) ausgeführt ist,
- ein Modul zur direkten Berechnung (335), das zum Berechnen eines berechneten Wertes der Kraftstoffversorgungsaufteilung anhand von zumindest einer bestimmten hydraulischen Größe des Versorgungskreislaufs (100) und des Mindestwertes zum Aufrechterhalten der bestimmten Druckgröße des Versorgungskreislaufs (100) ausgeführt ist.

11. Versorgungskreislauf (100) nach einem der Ansprüche 7 bis 10, wobei die Steuereinheit (30) ein Rechner der Turbomaschine ist.

12. Turbomaschine (10) mit einer Einspritzkammer (18), wobei die Einspritzkammer (18) ein Einspritzsystem aufweist, wobei die Turbomaschine (10) **dadurch gekennzeichnet ist, dass** diese außerdem einen Kraftstoffversorgungskreislauf (100) nach einem der Ansprüche 7 bis 11 aufweist, der das Einspritzsystem mit Kraftstoff versorgt.

## Claims

1. A method for controlling fuel injection into a combustion chamber (18) of a turbomachine (10), the turbomachine (10) comprising a fuel supply circuit (100) for an injection system of the combustion chamber (18), said supply circuit (100) comprising a pilot injection line (141) and a main injection line (142) between which fuel supply of the combustion chamber (18) is distributed,
controlling method in which, a transition of the supply distribution between the pilot injection line (141) and the main injection line (142) from a first distribution value to a second distribution value is made over a corresponding period of time (tt), the supply distribution having the second distribution value at the end of the corresponding period of time (tt),
the controlling method comprising, for a transition of the supply distribution from a first distribution value to a second distribution value for which fuel distribution from the pilot injection line (141) is reduced relative to that of this same pilot injection line (141) for the first distribution value, the following steps of:
a) determining at least one minimum value to be maintained of a pressure quantity of the supply circuit (100) for at least one part of the period of time,
b) determining at least one hydraulic quantity of the supply circuit (100),
c) calculating, from the determined hydraulic quantity of the supply circuit (100), a calculated distribution value of fuel supply corresponding to the minimum value to be maintained of the pressure quantity, the calculated distribution value being chosen from a range of values defined between the first distribution value and the second distribution value, said range of values including the first and second distribution values,
d) switching the fuel supply distribution to the calculated distribution value,
at least steps b) to d) being successively repeated for the whole duration of the corresponding period of time (tt)
wherein the minimum value to be maintained of a pressure quantity of the supply circuit for at least one part of the period of time is a require pressure minimum value for actuating at least a part of the hydraulique actuator of the turbomachine.

2. The method for controlling fuel injection according to claim 1, wherein, during step c) of calculating, from the determined hydraulic quantity of the supply circuit (100), a calculated distribution value of fuel supply corresponding to the minimum value to be maintained of the pressure quantity, the calculated distribution value is intermediate between the first distribution value and the second distribution value.

3. The method for controlling fuel injection according to claim 1 or 2, wherein step c) of calculating the calculated distribution value of fuel supply includes the following sub-steps of:
- calculating from the determined hydraulic quantity of the supply circuit (100) and from a current distribution value of fuel supplya current value of pressure quantity of the supply circuit (100),
- comparing the calculated current value of the pressure quantity of the supply circuit with the determined minimum value to be maintained of the pressure quantity of the supply circuit,
- calculating, from the comparison result, the calculated distribution value of fuel supply corresponding to the minimum value to be maintained.

4. The method for controlling injection according to claim 1 or 2, wherein step c) of calculating the calculated distribution value of fuel supply consists of a step of calculating said calculated distribution value of fuel supply from the at least one determined hydraulic quantity of the fuel supply circuit and from the determined minimum value to be maintained of the pressure quantity of the supply circuit.

5. The method for controlling fuel injection according to any of claims 1 to 4, wherein the pressure quantity is chosen from a pressure value of the supply circuit and a value of force developed by a cylinder supplied by the supply circuit, and the hydraulic quantity of the supply circuit is a value of the fuel supply flow rate of the injection chamber (18).

6. The method for controlling fuel injection according to any of claims 1 to 5, wherein upon successively repeating steps b) to d), step a) is also repeated, this being for determining a minimum value to be maintained of the pressure quantity of the fuel supply circuit for a fraction of period of the corresponding period of time (tt).

7. A circuit (100) for supplying a turbomachine with fuel, the fuel circuit including:
- a pilot injection line (141) for supplying a pilot part of an injection system of a combustion chamber of the turbomachine,
- a main injection line (142) for supplying a main part of the injection system of the combustion chamber,
- a fuel supply distributing device (130) configured to control fuel distribution between the pilot injection line (141) and the main injection line (142),
- a control unit (30) able to control the supply distributing device (130) and to make a measurement of some hydraulic quantities of the supply circuit (100),
the control unit (30) being configured to control the distributing system (130) so as to provide transition of the supply distribution between the pilot injection line (141) and the main injection line (142) from a first distribution value to a second distribution value over a corresponding period of time (tt), the supply distribution having the second distribution value at the end of the corresponding period of time,
the fuel supply circuit (100) **being characterised in that** the control unit (30) is further configured to, upon controlling by the fuel distributing system (130) to perform transition of supply distribution from a first distribution value to a second distribution value for which the fuel distribution of the pilot injection line (141) is reduced relative to that of this same pilot injection line (141) for the first distribution value, implement the following steps of:
a) determining at least one minimum value to be maintained of a pressure quantity of the supply circuit (100) for at least one part of the corresponding period of time (tt),
b) determining at least one hydraulic quantity of the supply circuit (100),
c) calculating, from the determined hydraulic quantity of the supply circuit (100), a calculated distribution value of fuel supply corresponding to the minimum value to be maintained of the pressure quantity, the calculated distribution value being chosen from a range of values defined between the first distribution value and the second distribution value, said range of values including the first and second distribution values,
d) switching the supply distribution to the calculated supply distribution value,
the control unit (30) being further configured to successively repeat steps b) to d) for the whole duration of the corresponding period of time (tt)
wherein the minimum value to be maintained of a pressure quantity of the supply circuit for at least one part of the period of time is a require pressure minimum value for actuating at least a part of the hydraulique actuator of the turbomachine.

8. The supply circuit (100) according to claim 7, wherein the control unit (30) is further configured so that, during step c) of calculating, from the determined hydraulic quantity of the supply circuit (100), a calculated distribution value of fuel supply corresponding to the minimum value to be maintained of the pressure quantity, the calculated distribution value is intermediate between the first distribution value and the second distribution value.

9. The supply circuit (100) according to claim 7 or 8, wherein the control unit (30) includes:
- a minimum pressure determining module (320) configured to determine a minimum value to be maintained of the pressure quantity of the supply circuit (100) for at least one part of the corresponding period of time (tt),
- a calculation module (330) configured to calculate from a determined hydraulic quantity of the supply circuit (100) and from a current value of the fuel supply distribution, a current value of the pressure quantity of the supply circuit (100),
- a comparison module (340) configured to compare the calculated current value of the pressure quantity of the supply circuit (100) with the determined minimum value to be maintained of the pressure quantity of the supply circuit (100), and to calculate, from the comparison result, a calculated distribution value of fuel supply corresponding to the determined minimum value to be maintained of the pressure quantity of the supply circuit (100).

10. The supply circuit (100) according to claim 7 or 8, wherein the control unit (30) includes
- a minimum pressure determining module (320) configured to determine a minimum value to be maintained of the pressure quantity of the supply circuit (100) for at least one part of the corresponding period of time (tt),
- a direct calculation module (335) configured to calculate a calculated distribution value of fuel supply from the at least one determined hydraulic quantity of the supply circuit (100) and from the determined minimum value to be maintained of the pressure quantity of the supply circuit (100).

11. The supply circuit (100) according to any of claims 7 to 10, wherein the control unit (30) is a turbomachine calculator.

12. A turbomachine (10) comprising an injection chamber (18), said injection chamber (18) comprising an injection system, said turbomachine (10) being **characterised in that** it further comprises a fuel supply circuit (100) according to any of claims 7 to 11 supplying the injection system with fuel.
